# FASCICULE DE BREVET EUROPEEN

(11) **EP 1 346 141 B1**
(45) Date de publication et mention de la délivrance du brevet: **16.03.2005**
(21) Numéro de dépôt: 01994890.0
(22) Date de dépôt: 18.12.2001
(51) Int. Cl.: F02M 21/02, F02M 63/02, F02M 69/46

(54) **DISPOSITIF ET METHODE D'INJECTION D'UN CARBURANT GAZEUX SOUS FORME LIQUIDE POUR MOTEUR A COMBUSTION INTERNE**
VERFAHREN UND VORRICHTUNG ZUR EINSPRITZUNG VON GASFÖRMIGEM BRENNSTOFF IN FLÜSSIGER PHASE FÜR EINE BRENNKRAFTMASCHINE
LIQUID-PHASE GAS FUEL METHOD AND DEVICE INJECTION FOR AN INTERNAL COMBUSTION ENGINE

(30) Priorité: 21.12.2000 FR 0016829
(43) Date de publication de la demande: 24.09.2003
(73) Titulaire: Institut Français du Pétrole, 92852 Rueil-Malmaison Cedex (FR)
(72) Inventeur: VENTURI, Stéphane, F-07100 Roiffieux (FR); RADENAC, Erwan, F-78130 Rochefort-en-Yvelines (FR); TILAGONE, Richard, F-38138 Les Côtes d'Arey (FR); BARLESI, Laurent, F-75008 Paris (FR); LE GLEUT, Cyril, F-56650 Inzinzac Lochrist (FR); LEDUC, Pierre, F-78650 Beynes (FR)
(86) Numéro de dépôt international: PCT/FR2001/004032
(87) Numéro de publication internationale: WO 2002/050417

(56) Documents cités:
- EP-A- 1 010 886
- EP-A- 1 036 935
- DE-A- 4 344 190
- PATENT ABSTRACTS OF JAPAN vol. 1998, no. 05, 30 avril 1998 (1998-04-30) & JP 10 018915 A (AISAN IND CO LTD), 20 janvier 1998 (1998-01-20)

## Description

La présente invention concerne l'injection d'un carburant liquide dans un moteur à combustion interne. Cette injection peut être selon l'invention effectuée directement dans les cylindres du moteur (injection directe) ou dans une conduite d'admission du moteur (injection indirecte).

Plus particulièrement, l'invention se rapporte à un dispositif d'injection sous forme liquide d'un carburant présentant un point d'ébullition inférieur à la température ambiante (environ +25°C) à la pression atmosphérique (environ 0,1 MPa) dans un conduit d'admission d'un moteur à combustion interne. Ce carburant peut être, par exemple du GPL (gaz de pétrole liquéfié), du dimethylether (DME), de l'éthylal, du méthylal ou du diéthyléther, ou des mélanges de ces carburants. Dans la suite de la description, on prendra l'exemple, non limitatif, de l'injection du GPL sous forme liquide.

La qualité du démarrage d'un tel moteur est conditionnée par la capacité de son dispositif d'injection à injecter le GPL sous forme liquide dès que l'injection est commandée. Ainsi, pour des temps d'injection de base correspondant à une injection du GPL en phase liquide, généralement cartographiés, la présence incontrôlée de GPL sous forme gazeuse dans la rampe d'injection, ou dans les autres conduits, lors de ladite injection ne permet pas de contrôler efficacement la quantité massique de GPL nécessaire au démarrage du moteur. Il est d'autre part connu de l'homme du métier que la pression de vapeur de carburant présente dans le réservoir et dans le circuit d'injection dépend fortement de la température régnant autour de ces éléments.

Plus généralement; la vaporisation du GPL peut intervenir suite à :
- une augmentation de la température du GPL de telle sorte que la pression du carburant devienne inférieure ou égale à la pression de vapeur saturante correspondante du GPL dans le réservoir et/ou dans le circuit d'injection, par exemple dans la rampe d'injection lors des phases d'arrêt du moteur quand celui-ci est encore chaud,
- une baisse de la pression ambiante (à température constante) à un seuil inférieur ou égal à la pression de vapeur saturante correspondant à la température ambiante; ce cas se rencontre notamment à l'arrêt du moteur et suite à une fuite de carburant au niveau des injecteurs, ceux-ci n'étant généralement pas étanches à la pression de GPL présente dans la rampe d'injection.

Avec des technologies d'injection de carburant liquide telles que celles classiquement utilisées pour une injection essence, le fort écart de pression présent entre l'amont et l'aval de l'injecteur, en fonctionnement en injection de GPL liquide, provoqué une fuite de carburant au niveau dés injecteurs. Cette fuite est d'autant plus importante que l'écart en pression est beaucoup plus important que celui classiquement retenu pour une utilisation en injection essence. C'est notamment le cas lorsque la rampe d'injection GPL est directement en communication avec le réservoir dont la pression interne varie classiquement et suivant la température ambiante entre 0,1 et 1,5 MPa environ.

Cette fuite est à l'origine de divers problèmes :
- une saturation à terme des conduits d'admission du moteur en GPL gazeux. Dans le cas d'un moteur présentant un allumage jumo-statique, il y a un risque important d'inflammation du GPL gazeux présent dans les conduits d'admission et de retour de flamme pouvant endommager la partie admission du moteur,
- la quantité de GPL gazeux présent dans le conduit d'amission suite à ladite fuite est difficilement prise en compte et perturbe le démarrage,
- une diminution de la pression du GPL présent dans la rampe d'admission occasionne une vaporisation partielle voir complète du GPL liquide présent dans la rampe et ne permet pas ensuite un contrôle précis des quantités injectées,
- une augmentation corrélative de l'émission de polluants.

L'augmentation de la pression d'un carburant sous l'effet d'une pompe basse pression dans une rampe d'injection comprenant une conduite de retour carburant a par exemple été décrite dans la demande de brevet japonais JP11036990.

Le brevet US 5,377,465 décrit une méthode permettant de maintenir, sous l'effet d'une pompe, un carburant (GPL) sous forme liquide dans la rampe d'injection lors du fonctionnement du moteur à une pression constamment supérieure à la pression de vapeur saturante du réservoir grâce à la présence d'un régulateur de pression positionné en aval des injecteurs.

Aucun de ces systèmes ne permet cependant de résoudre efficacement les problèmes spécifiques de fuite et de vaporisation du GPL, notamment lors de l'arrêt et/ou du redémarrage du moteur.

La demande de brevet EP-A1-1036935 propose par exemple pour remédier aux fuites d'isoler le système d'alimentation comprenant les injecteurs et de purger le carburant liquide vers un système de stockage (canister) approprié. Ce mode de fonctionnement nécessite donc la présence d'un circuit et d'un réservoir supplémentaire de carburant qui tend à augmenter de façon sensible le coût du dispositif.

La demande EP-A-1 010 886 prévoit de minimiser les fuites de carburant en disposant d'un circuit de dérivation du carburant. Ce circuit de dérivation est actif à l'arrêt du moteur et permet d'évacuer le carburant vers le réservoir. Outre le fait que ce dispositif nécessite un circuit supplémentaire de décharge de carburant, il n'empêche en aucune manière la présence de carburant gazeux dans la rampe, carburant gazeux qui nuit au bon fonctionnement du moteur lors de son démarrage.

Le dispositif selon l'invention permet de gérer l'injection liquide du carburant lors du démarrage d'un moteur à combustion interne fonctionnant avec un carburant tel que définit précédemment, par exemple du GPL.

Ainsi, le but de l'invention est de fournir un dispositif d'injection d'un carburant sous forme liquide dans un moteur à combustion interne permettant de pallier les inconvénients ci-dessus évoqués et en particulier d'éviter toute vaporisation du carburant notamment lors du démarrage du moteur, et ce de manière simple, efficace et peu coûteuse.

L'invention permet en outre de s'affranchir des problèmes de confinement dudit GPL liquide dans le circuit d'injection en évitant notamment les conséquences néfastes d'éventuelles fuites des injecteurs. En outre, il est possible selon l'invention d'utiliser pour l'injection du GPL liquide les injecteurs et les pompes classiquement commercialisés pour l'injection directe ou indirecte d'essence, en fonction du lieu et de la pression d'injection du GPL dans le moteur.

Ainsi, la présente invention concerne un dispositif d'injection sous forme liquide dans un moteur à combustion interne d'un carburant présentant un point d'ébullition inférieur à la température ambiante, à la pression ambiante, comprenant un circuit en circulation fermée comportant :une pompe, une rampe d'alimentation reliée à des injecteurs par des conduits en dérivation. Le dispositif comporte en outre :
- des moyens d'obturation placés en aval de ladite rampe de façon à fermer le circuit,
- des moyens de télécommande des moyens d'obturation.
- des moyens d'isolation entre lesdits injecteurs et ladite rampe dans lequel lesdits moyens d'isolation comportent des moyens de pilotage actionnés par la pression du carburant régnant à l'intérieur de ladite rampe.
Selon l'invention, la pompe a une pression de refoulement admissible au moins égale à la pression de liquéfaction du carburant dans les conditions de température de fonctionnement du moteur, la pression de liquéfaction étant obtenue lors du démarrage du moteur lorsque la pompe refoule sur le circuit obturé par les moyens d'obturation.

Dans une variante, le circuit peut comporter en amont de la rampe un deuxième moyen d'obturation du circuit.

Le deuxième moyen d'obturation peut être du type clapet anti-retour.

Le circuit peut comporter des moyens de création d'une perte de charge en aval de la rampe de façon à maintenir une pression minimale dans la rampe d'alimentation.

Les moyens d'isolation peuvent comporter un tiroir à deux positions, la position fermée étant obtenue par l'action d'un moyen de rappel, la position ouverte étant obtenue par l'action de la pression du carburant amené par un conduit de pilotage reliant la rampe aux moyens d'isolation.

Dans une autre variante, les moyens d'obturation en aval peuvent comporter en série deux vannes télécommandées à deux voies, et les moyens d'isolation peuvent comporter un piston soumis d'un coté à la pression du carburant dans la rampe, de l'autre à la pression du carburant amenée par un conduit de communication relié au circuit entre les deux vannes, le piston étant solidaire d'un moyen de contrôle de l'alimentation en carburant entre la rampe et les injecteurs.

Les moyens d'isolation peuvent comporter un ressort de rappel qui déplace le piston et le moyen de contrôle de l'alimentation pour fermer celle-ci lorsque la pression différentielle sur les deux cotés du piston est inférieure à une valeur déterminée.

Des moyens de télécommandes peuvent délivrer des consignes aux deux vannes compte tenu des phases : de fonctionnement, d'arrêt, et de démarrage.

La présente invention concerne également une méthode d'injection sous forme liquide dans un moteur à combustion interne d'un carburant présentant un point d'ébullition inférieur à la température ambiante, à la pression ambiante, dans laquelle on effectue les étapes suivantes :
- on dispose une pompe, une rampe d'alimentation reliée à des injecteurs par des conduits en dérivation, de moyens d'obturation placés en aval de la rampe de façon à pouvoir fermer le circuit, de moyens de télécommande des moyens d'obturation,
- on choisit la pompe pour avoir une pression de refoulement admissible au moins égale à la pression de liquéfaction du carburant dans les conditions de température de fonctionnement du moteur,
- on liquéfie le carburant en amont des moyens d'obturation en faisant débiter la pompe dans le circuit obturé par les moyens d'obturation.

On peut disposer de moyens d'isolation sur les conduits de dérivation.

On peut piloter les moyens de dérivation par la pression régnant dans la rampe.

Les moyens d'obturation peuvent comporter deux vannes deux voies en série, chaque moyens d'isolation comportant un piston soumis d'un coté à la pression du carburant dans la rampe, de l'autre à la pression du carburant amenée par un conduit de communication relié au circuit entre les deux vannes. Selon cette configuration, on peut effectuer les étapes suivantes :
- à l'arrêt du moteur : on arrête la pompe et on ferme la vanne aval,
- au démarrage du moteur : on ferme la vanne amont, on démarre la pompe,
- en fonctionnement : les deux vannes sont ouvertes.

D'autres caractéristiques, détails et avantages de l'invention apparaîtront plus clairement à la lecture de la description des exemples de réalisation suivants, nullement limitatifs et illustrés par les figures ci-après annexées, parmi lesquelles :
- La figure 1 illustre un schéma général du circuit d'un dispositif d'injection selon l'invention.
- La figure 2 illustre un mode de réalisation du système d'isolation mentionné dans la figure 1.
- La figure 3 illustre un deuxième mode de réalisation du dispositif selon l'invention.
- Les figures 4a et 4b schématisent en détail un bloc injecteur-clapet d'isolation tel que mentionné dans la figure 3.

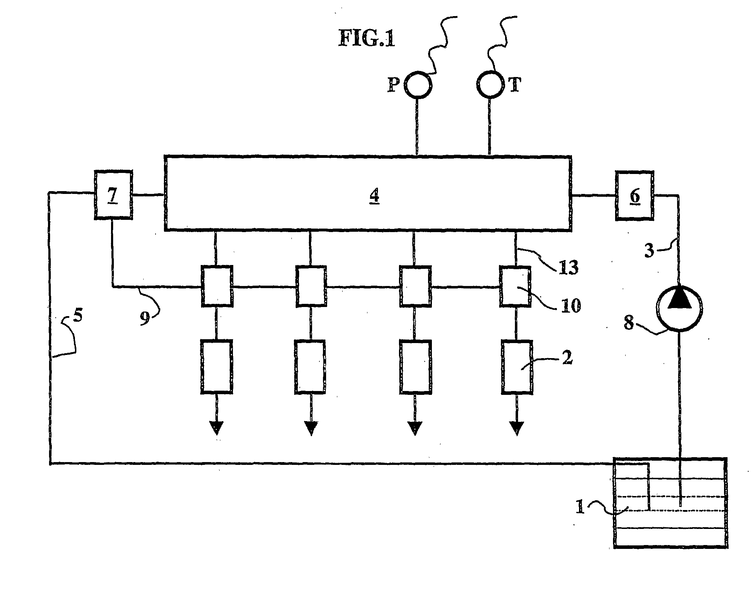

En se reportant à la figure 1 : Le dispositif comprend un réservoir (1) étanche dans lequel est stocké un carburant présentant un point d'ébullition inférieur à la température ambiante, à la pression atmosphérique (environ 0,1 MPa) tel que du GPL. Le carburant est injecté dans le collecteur d'admission (non représenté) vers les cylindres du moteur (non représentés) par des injecteurs (2) d'un type connu et classiquement utilisé pour une injection liquide d'essence. II y a autant d'injecteurs que de cylindres. Le GPL est transporté du réservoir (1) jusqu'à une rampe d'injection (4) sous l'action d'une pompe (8) par l'intermédiaire d'un conduit (3). Le GPL non injecté vers les cylindres du moteur est réintégré dans le réservoir (1) par un conduit de retour (5). En amont et en aval de ladite rampe (4) sont placés des moyens d'obturation (6, 7) permettant d'isoler dans certaines conditions d'utilisation, en particulier lors du démarrage, le carburant présent dans la rampe (4) du reste du circuit. Les moyens d'obturation (7) sont un système commandé électriquement par un moyen de commande extérieur et dont la fermeture permet en outre d'assurer la liquéfaction du GPL présent dans la rampe d'injection (4) sous l'action de la pression générée par la pompe (8). Le moyen d'obturation (6) peut être un clapet anti-retour de type connu.

Le circuit carburant comprend un tube de pilotage (9) qui transmet une pression hydraulique à un système (10) d'ouverture et de fermeture (ou moyens d'isolation) d'un canal de passage (13) (aussi appelé dans la présente description ligne de communication ou conduit de dérivation) du carburant issu de la rampe (4). Chaque canal (13) alimente en carburant chaque injecteur (2). La pression de pilotage du conduit (9) peut provenir de la pression régnant dans la rampe (4) distribuée par l'intermédiaire des moyens d'obturation en aval de la rampe (7).

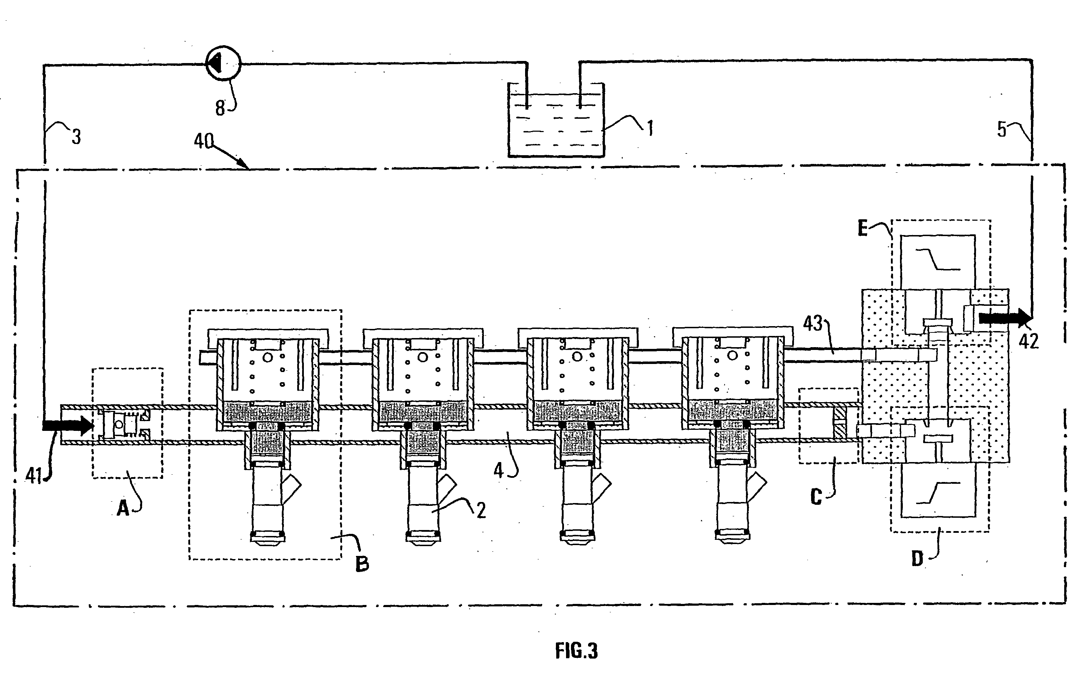

Dans le mode de réalisation représenté sur la figure 1, le tube (9) est connecté aux moyens d'obturation (7). Selon ce mode, les moyens (7) d'obturation peuvent être constitués par au moins deux électrovannes 2 voies qui commandent indépendamment la fermeture (ou l'ouverture) du tube (9) et l'obturation de la rampe (4) en aval du circuit carburant. Son mode de fonctionnement sera décrit par la suite en relation avec la figure 3. Cependant, il est également possible sans sortir du cadre de l'invention (dans un mode de réalisation non représenté) de connecter le tube (9) à un autre élément de distribution d'une pression de pilotage des moyens d'isolation (10).

Lors du démarrage du moteur, la pompe (8) est mise en marche et les moyens d'obturation (7) en position fermée permettent le confinement du GPL pompé dans la rampe (4) et dans les conduits de dérivation (13), assurant ainsi la montée en pression et la liquéfaction du GPL présent en amont des injecteurs, et notamment dans la rampe.

En fonction de la pression nécessaire dans ladite rampe pour assurer la liquéfaction complète du carburant et des conditions optimales de fonctionnement du moteur, la gestion des moyens d'obturation (7) par une commande extérieure permet avantageusement :
- l'obturation de la rampe (4) en amont du tube (5) de retour carburant permet ainsi une montée en pression pratiquement instantanée du GPL dans la rampe avant la phase de démarrage du moteur, la montée en pression étant fonction du volume de gaz présent dans les conduites,
- un asservissement de l'ouverture des lignes (13) à partir de la pression de GPL présente dans la rampe par l'intermédiaire du tube (9) et des moyens d'isolation (10),
- un retour du carburant non injecté dans les cylindres du moteur vers le réservoir (1) lors du fonctionnement normal.

Par exemple, lors du fonctionnement normal du moteur, le maintien d'une circulation de GPL entre la rampe (4) et le conduit (5) par l'ouverture commandée du moyen (7) permettra de réguler la pression au niveau de la rampe (4) et des injecteurs (2), autorisant ainsi un meilleur contrôle de la durée et de la quantité de carburant introduit lors de l'injection. De plus, afin de contrôler efficacement la quantité de carburant injecté par les injecteurs (2), des capteurs de pression (P) et/ou de température (T) sont implantés au niveau de la rampe et reliés à un moyen extérieur de commande de la durée d'ouverture des injecteurs (non représenté sur la figure 1)

Le système d'isolation (10) permet l'alimentation des injecteurs en GPL lors du fonctionnement du moteur et assure avec les moyens d'obturation (6, 7) l'étanchéité de la rampe (4) lorsque le moteur n'est pas en fonctionnement. Le système d'isolation est alors normalement en position fermée. L'ouverture dudit système (10) est effectuée sous l'action de la pression hydraulique du GPL présent dans le tube (9). Lors de l'arrêt du moteur, la gestion du niveau de la pression du GPL présent dans le tube (9) entraîne la fermeture du système (10).

Le principe d'un tel circuit de distribution du GPL liquide présente notamment l'avantage de ne pas nécessiter de contrôles de régulation complexes au niveau de la pompe et du processus de liquéfaction. En effet, il suffit de choisir une pompe dont la capacité de pression admissible est telle qu'elle permet la liquéfaction du GPL dans toutes les conditions de températures, et de la faire débiter au démarrage sur un circuit obturé par les moyens d'obturation (7) que l'on ouvre ensuite, soit à partir d'une valeur de pression déterminée par les capteurs (P et T), soit après un temps donné que l'on sait correspondre à une liquéfaction totale du carburant contenu dans la rampe. Dans les deux cas, la seule commande est celle de l'ouverture des moyens (7) pour établir une circulation de GPL liquide à une pression favorable.

De plus, on sait que l'action de liquéfaction par la pompe sera courte puisque des moyens d'isolation (10) des injecteurs limitent les fuites et donc la dépressurisation dans la rampe.

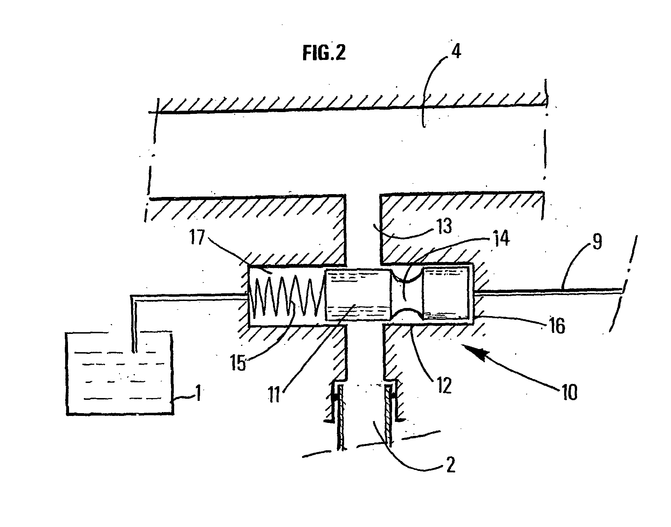

Selon la figure 2, est représenté un mode de réalisation des moyens d'isolation (10). Les moyens sont composés d'un tiroir (11) présent dans un logement (12). Le tiroir (11) délimite deux zones isolées de manière étanche dans le logement (12) :
- une zone d'arrivée de la pression de pilotage (16), par exemple du carburant communiquant avec le conduit (9),
- une zone de régulation (17) maintenue en communication avec le réservoir et donc sensiblement à la même pression que celui-ci, dans laquelle est disposé un ressort (15) exerçant une poussée axiale sur le tiroir (11) faisant coulisser celui-ci dans le logement (12).

Le mouvement dudit tiroir ou piston (11) mobile dans le logement (12) dépend du bilan entre la force exercée par la pression de GPL occasionnée par le fonctionnement de la pompe (8) dans la zone (16) communiquant avec ladite ligne (9) et entre celle exercée par le ressort de rappel (15) situé à l'opposé de la face du piston.

Le piston (11), le ressort (15) et le logement (12) sont dimensionnés selon toute technique connue de telle façon que lors de l'arrêt de la pompe (8), après équilibre des pressions exercées sur chaque face du piston (sensiblement à la pression du réservoir), la force exercée par le ressort (15) entraîne un déplacement du piston (11) dans une position où il obstrue de manière étanche le canal de dérivation ou ligne de communication (13) entre la rampe (4) et les injecteurs (2). Dans cette position, le canal de transfert (14) usiné dans ledit piston (11) est isolé de manière étanche de l'orifice de sortie vers l'injecteur (2) par les parois du logement (12). Lors du fonctionnement de la pompe (8), la surpression exercée par le carburant issu du tube (9) sur le piston (11) dans la zone (16) génère une force supérieure à celle exercée par le ressort (15) qui se comprime alors au fur et à mesure que le piston (11) se déplace. Le canal de transfert (14) est ainsi amené en communication avec la ligne (13), permettant le débit de carburant de la rampe (4) vers les injecteurs (2). A l'arrêt de la pompe (8), la chute de pression du carburant dans la zone (16) entraîne la fermeture étanche de la ligne de communication (13) et l'isolation de la rampe (4) sous l'effet de la force de rappel du ressort (15).

Il faut noter que, compte tenu du processus de liquéfaction explicité plus haut, la pression de, pilotage est importante au démarrage, ce qui favorise l'ouverture très rapide des systèmes (10) d'isolation des injecteurs.

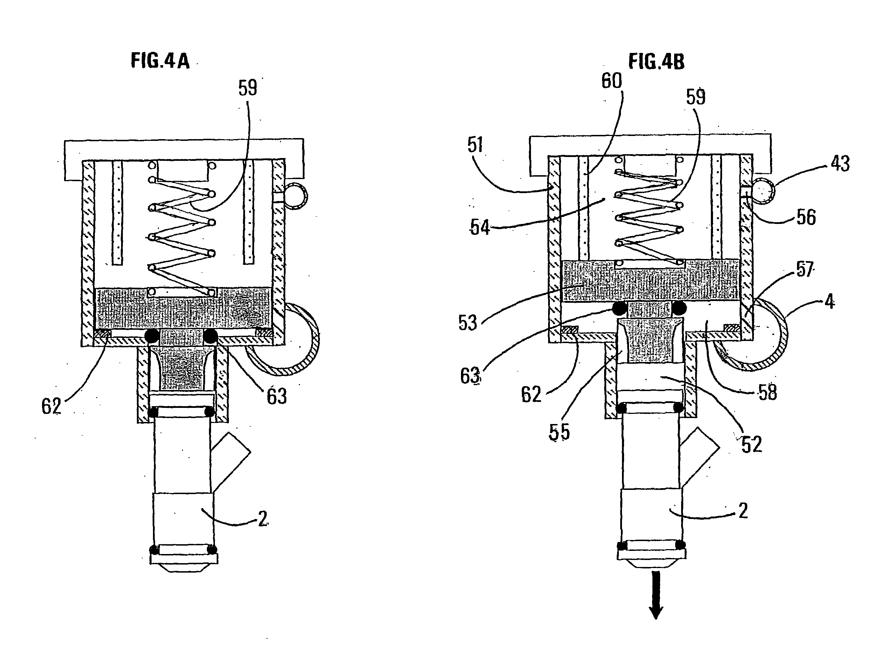

Un autre mode de réalisation de l'invention est illustré par la figure 3. La référence (40) désigne un dispositif d'injection. Des moyens d'isolation sont en connexion avec chaque injecteur (2) sous la forme d'un bloc injecteur-clapet d'isolation identifié par la lettre B dont les caractéristiques détaillées seront décrites avec les figures 4a et 4b. A chaque bloc B correspond un cylindre du moteur (non représenté). Le carburant GPL en circulation, issu du réservoir (1), est amenée sous pression par une conduite (3) à l'entrée (41) de la rampe d'injection (4) sous l'action d'une pompe (8) (figure 1). A la sortie (42) du dispositif (40) représenté sur la figure 3, une conduite (5) assure le, retour du carburant non injecté dans les cylindres du moteur vers le réservoir. Le dispositif représenté sur la figure 3 comprend un clapet anti-retour A très faiblement taré évitant un reflux de GPL introduit dans la rampe (4) vers le réservoir. Le clapet A est choisi de telle façon qu'après l'arrêt de la pompe, et si la sortie (42) de la rampe (4) est fermée, l'étanchéité de la rampe (4) soit effective et augmente avec la pression. Un moyen C, par exemple un gicleur ou un diaphragme, permet de générer une perte de charge lors du passage du carburant à travers un orifice calibré. Le moyen C est placé dans le circuit carburant sur la rampe (4) en aval des blocs injecteur-clapet de façon à créer une pression suffisante pour l'alimentation des injecteurs. Deux électrovannes 2 voies D et E (constituant l'élément d'obturation (7) de la figure 1) sont disposées en aval de l'élément C. L'électrovanne D, dont la position est normalement ouverte, permet, lorsqu'elle est fermée, d'obturer la rampe d'injection (4) et de l'isoler d'une ligne ou rampe de communication (43) reliée au dispositif d'isolation de chacun des blocs injecteur-clapet B. L'électrovanne E, dont la position est normalement fermée, permet l'isolation du dispositif d'injection (40) du réservoir (1). Par « normalement » fermée ou ouverte, il faut comprendre la position de repos que prend l'électrovanne non alimentée par une commande électrique.

Les figures 4a et 4b représentent schématiquement un mode de réalisation du bloc injecteur-clapet B. La figure 4b représente le bloc B lorsque celui-ci est en position ouverte, c'est à dire lorsque le carburant liquide peut passer de la rampe d'injection (4) à l'injecteur (2). La figure 4a représente ce même bloc B en position fermée. Le bloc comprend un injecteur (2) de technologie identique à celle habituellement utilisée pour une injection liquide essence. Un piston d'étanchéité (53) délimite trois chambres : une chambre supérieure (54) en communication avec la rampe (43) par l'intermédiaire du canal de transfert supérieur (56), une chambre intermédiaire (58) en communication avec la rampe d'alimentation (4) par l'intermédiaire du canal de transfert inférieur (57), et une chambre inférieure (52) en communication avec la chambre intermédiaire (58) par les fentes calibrées (55) uniquement dans le cas où le piston (53) est en position haute (figure 4b). En position haute, les moyens d'étanchéité (63) ont quitté leur siège et les chambres (58) et (52) communiquent. La chambre inférieure (52) est en communication avec l'entrée de l'injecteur (2). Il résulte donc de ce qui précède que la ligne de communication entre un injecteur (2) et la rampe (4) comprend selon ce mode de réalisation les éléments 52, 55, 58 et 57. Le débattement du piston (53) lors de son déplacement dans le corps (51) est limité par les moyens d'arrêt (60), par exemple des tiges, et l'appui sur un joint (62). Le ressort (59) maintient le piston (53) en appui sur ce joint (62), ou le fond du cylindre, lorsque l'écart de pression entre la chambre intermédiaire (58) et la chambre supérieure (54) est suffisamment faible, typiquement lors des phases d'arrêt du moteur (figure 4a). Le piston (53) est maintenu en position haute (figure 4b) sous l'effet de la différence de pression entre les chambres supérieure (54) et intermédiaire (58), c'est à dire lorsque la pression régnant dans la chambre intermédiaire (58) est suffisamment supérieure à celle présente dans la chambre supérieure (54) pour entraîner la compression du ressort (59), typiquement lors des phases de démarrage et de fonctionnement. Dans ce cas, le GPL consommé par le moteur transite sous pression de la rampe (4) vers l'injecteur (2) en passant successivement par le canal de transfert inférieur (57), la chambre intermédiaire (58), les fentes calibrées (55) et la chambre inférieure (52).

Lorsque le moteur ne tourne pas, la pompe est normalement à l'arrêt et la rampe (4) est isolée du reste du circuit par la fermeture du clapet anti-retour A sous l'effet conjoint de la pression régnant dans la rampe (4) et de la fermeture de l'électrovanne E, l'électrovanne D étant en position ouverte. La pression est équilibrée dans la rampe (4) et dans le conduit de communication (43), donc le piston (53) est soumis à l'action du ressort de rappel (59) qui isole la chambre inférieure (52) de la chambre intermédiaire (58). Les injecteurs sont isolés de la rampe (4).

Dans le cas général d'un démarrage, par exemple dans le cas critique où le moteur est encore chaud, la mise en fonctionnement de la pompe est précédée par la fermeture de l'électrovanne D et l'ouverture de l'électrovanne E. Le GPL mis sous pression par la pompe pénètre dans la rampe (4) par le clapet A qui s'ouvre sous l'effet de la surpression. Sous l'effet de la pompe, la pression du GPL contenu dans la rampe étanche grâce à l'obturation de D atteint un seuil suffisant pour liquéfier totalement le GPL contenu dans ladite rampe (4), dans l'éventualité d'une vaporisation partielle du carburant dans cet espace. L'ouverture consécutive, ou pratiquement simultanée à la fermeture de D, de l'électrovanne E permet de faire chuter la pression présente dans le tube (43) et par suite dans la chambre supérieure (54) du clapet d'isolation du bloc B. La chambre intermédiaire (58) est soumise à la pression de la pompe correspondante au processus de liquéfaction ce qui provoque la levée du piston (53) et l'ouverture instantanée dudit clapet. Cette ouverture permet au GPL sous forme sensiblement totalement liquide présent dans la rampe (4) d'alimenter les injecteurs. La commande de l'allumage et des injecteurs peut ensuite se faire pour assurer sans risque un démarrage du moteur.

Suivant un mode de fonctionnement avantageux du dispositif selon l'invention, il est possible d'ouvrir et de maintenir l'électrovanne E en position ouverte et de remettre l'électrovanne D en position ouverte, pour que le carburant non injecté retourne au réservoir. Ce mode de fonctionnement présente notamment l'avantage de faire baisser sensiblement là pression dans la rampe (4) et les injecteurs (2), autorisant ainsi un meilleur contrôle de la durée et de la quantité de carburant introduit lors de l'injection. A l'exception des phases de démarrage et d'arrêt du moteur, c'est avantageusement le mode normal de fonctionnement du dispositif lorsque ledit moteur est en marche. Lors du fonctionnement selon le mode normal, les clapets d'isolation des blocs sont maintenus ouverts en raison du maintien d'une différence de pression suffisante entre les deux faces du piston (53) du clapet d'isolation, c'est à dire à la différence de pression entre la chambre supérieure (54) et la chambre intermédiaire (58). Selon ce mode de fonctionnement ladite différence de 5 pression est donc principalement assurée par la perte de charge générée par l'élément C lors de la circulation du GPL. Il est de plus à noter que le surplus de GPL contenu dans la rampe (4) retourne selon ce mode de fonctionnement au réservoir par la conduite de retour carburant (5), la rampe de communication (43) étant un volume non balayé par le débit de GPL.

Lors de la phase d'arrêt du moteur, on réalise la coupure de l'alimentation de la pompe à carburant et l'isolation de la rampe (4) (par la fermeture de l'électrovanne E) sensiblement dans le même temps, l'électrovanne D restant ouverte. L'équilibre des pressions sur les deux faces du piston d'étanchéité (53) du clapet d'isolation du bloc B entraîne la fermeture desdits clapets sous l'effet de la force de rappel du ressort (59). Afin d'éventuellement éliminer le carburant résiduel contenu dans la chambre inférieure (52) du clapet d'isolation du bloc B, il est possible selon l'invention de maintenir sur quelques tours vilebrequin du moteur la commande de l'allumage et de l'ouverture des injecteurs (2) en augmentant légèrement la consigne de régime moteur avant la coupure générale. Cette stratégie permet non seulement de limiter les conséquences d'une fuite éventuelle des injecteurs (2), mais également de diminuer la pression de GPL dans cette zone, contribuant ainsi à accroître l'étanchéité du clapet d'isolation en augmentant la différence de pression entre les deux faces du piston (53) du clapet d'isolation.

Le démarrage du moteur après un fonctionnement prolongé à chaud peut être critique. En effet, l'augmentation de la température sous l'effet des calories dégagées par le moteur entraîne une forte augmentation de la pression de carburant dans la rampe (4) et la rampe (43) isolées par les éléments A et E. La présence d'une très forte pression pouvant être préjudiciable au bon fonctionnement de l'injecteur, il est possible, sans sortir du cadre de l'invention, d'ouvrir suivant des séquences pré-établies l'électrovanne E, permettant ainsi d'évacuer le GPL vers le réservoir par la conduite de retour carburant, ce qui entraîne une baisse de ladite pression à un niveau proche de la pression du réservoir.

Les moyens de commandes, non représentés sur les figures, sont à la portée de l'homme du métier connaissant les moyens de contrôle d'un moteur à combustion interne. Ils comprennent généralement des capteurs, de pression de température, d'analyse de la combustion, dont les signaux sont transmis à un ordinateur comportant en mémoire des cartographies de fonctionnement ainsi que des données. En fonction des conditions de fonctionnement, des commandes sont envoyées aux actionneurs, par exemple les électrovannes.

## Revendications

1. Dispositif d'injection sous forme liquide dans un moteur à combustion interne d'un carburant présentant un point d'ébullition inférieur à la température ambiante, à la pression ambiante, comprenant un circuit en circulation fermée comportant : un réservoir (1) du carburant relié à une pompe (8) alimentant une rampe d'alimentation (4) reliée à des injecteurs (2) par des conduits en dérivation (13;57) et reliée au réservoir (1) par un conduit de retour (5),
**caractérisé en ce qu'**il comporte en outre :
- des moyens d'obturation (7 ;E, D) placés en aval de ladite rampe (4) de façon à fermer le circuit,
- des moyens de télécommande desdits moyens d'obturation (7;E,D)
- des moyens d'isolation (10 ;B) entre lesdits injecteurs (2) et ladite rampe (4),
dans lequel lesdits moyens d'isolation comportent des moyens de pilotage (9 ;43) actionnés par la pression du carburant régnant à l'intérieur de ladite rampe (4),
et dans lequel ladite pompe (8) a une pression de refoulement admissible au moins égale à la pression de liquéfaction dudit carburant dans les conditions de température de fonctionnement du moteur, ladite pression de liquéfaction étant obtenue lors du démarrage du moteur lorsque la pompe (8) refoule sur le circuit obturé par lesdits moyens d'obturation (7;E,D).

2. Dispositif selon la revendication 1, dans lequel le circuit comporte en amont de la rampe (4) un deuxième moyen d'obturation (6 ; A) du circuit.

3. Dispositif selon la revendication, 2, dans lequel ledit deuxième moyen d'obturation (6;A) est du type clapet anti-retour.

4. Dispositif selon l'une des revendications précédentes dans lequel ledit circuit comporte des moyens de création (C) d'une perte de charge en aval de la rampe (4) de façon à maintenir une pression minimale dans ladite rampe d'alimentation (4).

5. Dispositif selon la revendication 1, dans lequel lesdits moyens d'isolation comportent un tiroir (11) à deux positions, la position fermée étant obtenue par l'action d'un moyen de rappel (15) , la position ouverte étant obtenue par l'action de la pression du carburant amené par un conduit de pilotage (9) reliant la rampe aux moyens d'isolation.

6. Dispositif selon la revendication 1, dans lequel lesdits moyens d'obturation en aval comportent deux vannes télécommandées (E, D) à deux voies, lesdits moyens d'isolation comportent un piston (53) soumis d'un coté (54) à la pression du carburant dans la rampe, de l'autre (58) à la pression du carburant amenée par un conduit de communication (43) relié au circuit entre lesdites deux vannes (E, D), ledit piston étant solidaire d'un moyen de contrôle de l'alimentation (55) en carburant entre la rampe et les injecteurs.

7. Dispositif selon la revendication 6, dans lequel lesdits moyens d'isolation comportent un ressort de rappel (59) qui déplace le piston (53) et le moyen de contrôle de l'alimentation (55) pour fermer celle-ci lorsque la pression différentielle sur les deux cotés du piston est infériéure à une valeur déterminée.

8. Dispositif selon l'une des revendications 6 ou 7, dans lequel les moyens de télécommandes délivrent des consignes aux deux vannes compte tenu des phases : de fonctionnement, d'arrêt, et de démarrage.

9. Méthode d'injection sous forme liquide dans un moteur à combustion interne d'un carburant présentant un point d'ébullition inférieur à la température ambiante, à la pression ambiante, dans laquelle on effectue les étapes suivantes :
- on dispose un réservoir (1) du carburant relié à une pompe (8) alimentant une rampe d'alimentation (4) reliée à des injecteurs (2) par des conduits en dérivation (13 ; 57) et reliée au réservoir (1) par un conduit de retour (5), de moyens d'obturation (7;E,D) placés en aval de ladite rampe (4) de façon à pouvoir fermer le circuit, de moyens de télécommande desdits moyens d'obturation (7;E,D),
- on choisit ladite pompe (8) pour avoir une pression de refoulement admissible au moins égale à la pression de liquéfaction dudit carburant dans les conditions de température de fonctionnement du moteur,
- lors du démarrage du moteur, on liquéfie ledit carburant en amont des moyens d'obturation (7;E,D) en faisant débiter la pompe (8) dans le circuit obturé par lesdits moyens d'obturation (7;E,D).

10. Méthode selon la revendication 9, dans laquelle on dispose de moyens d'isolation (10;B) sur lesdits conduits de dérivation (13).

11. Méthode selon la revendication 10, dans laquelle on pilote lesdits moyens d'isolation (10;B) par la pression régnant dans ladite rampe (4).

12. Méthode selon l'une des revendications 10 ou 11, dans laquelle lesdits moyens d'obturation comportent deux vannes (E, D) deux voies en série, chaque moyens d'isolation comportant un piston (53) soumis d'un coté à la pression du carburant dans la rampe (4), de l'autre à la pression du carburant amenée par un conduit de communication relié au circuit entre lesdites deux vannes (E,D), méthode dans laquelle :
- à l'arrêt du moteur : on arrête la pompe (8) et on ferme la vanne aval (E),
- au démarrage du moteur : on ferme la vanne amont (D), on démarre la pompe (8),
- en fonctionnement : les deux vannes (E, D) sont ouvertes.

## Claims

1. Device for injection into an internal combustion engine, in liquid form, of a fuel having a boiling point lower than ambient temperature, at ambient pressure, comprising a closed circulation circuit including a fuel tank (1) connected to a pump (8) supplying a supply rail (4) connected to injectors (2) by off-take pipes (13; 57) and connected to the tank (1) by a return pipe (5); ***characterised by** the fact* that it also includes:
- obturation means (7; E, D) positioned downstream of the said rail (4) so as to close the circuit,
- means for remote control of the said obturation means (7; E, D), isolation means (10; B) between the said injectors (2) and the said rail (4), in which the said isolation means include control means (9; 43) actuated by the fuel pressure inside the said rail (4), and in which the said pump (8) has an admissible delivery pressure at least equal to the liquefaction pressure of the said fuel under the operating temperature conditions of the engine, the said liquefaction pressure being obtained at starting of the engine when the pump (8) delivers to the circuit obturated by the said obturation means (7; E, D).

2. Device as described in claim 1, in which, upstream of the rail (4), the circuit includes a second means (6; A) for obturation of the circuit.

3. Device as described in claim 2, in which the said second obturation means (6; A) is of the non-return valve type.

4. Device as described in one of the preceding claims in which the said circuit includes means (C) for creating a pressure drop downstream of the rail (4) so as to maintain a minimum pressure in the said supply rail (4).

5. Device as described in claim 1, in which the said isolation means include a slide-valve (11) with two positions, the closed position being obtained by the action of a return means (15), the open position being obtained by the action of the pressure of the fuel fed through a control pipe (9) connecting the rail to the isolation means.

6. Device as described in claim 1, in which the said downstream obturation means include two remote-controlled two-way valves (E, D), and the said isolation means include a piston (53) subjected on one side (54) to the fuel pressure in the rail and on the other (58) to the pressure of the fuel supplied through a communication pipe (43) connected to the circuit between the said two valves (E, D), the said piston being firmly attached to a means (55) controlling the supply of fuel between the rail and the injectors.

7. Device as described in claim 6, in which the said isolation means include a return spring (59) which displaces the piston (53) and the supply control means (55) to close this supply when the pressure differential on the two sides of the piston is less than a determined value.

8. Device as described in one of claims 6 or 7, in which the remote control means deliver setpoint values to the two valves taking account of the phases: operating, stopping and starting.

9. Method for injection into an internal combustion engine, in liquid form, of a fuel having a boiling point lower than ambient temperature, at ambient pressure, in which the following steps are performed:
- there are arranged a fuel tank (1) connected to a pump (8) supplying a supply rail (4) connected to injectors (2) by off-take pipes (13; 57) and connected to the tank (1) by a return pipe (5), obturation means (7; E, D) positioned downstream of the said rail (4) so as to be able to close the circuit, and means for remote control of the said obturation means (7; E, D),
- the said pump (8) is selected to have an admissible delivery pressure at least equal to the pressure of liquefaction of the said fuel under the operating temperature conditions of the engine,
- on starting of the engine the said fuel is liquefied upstream of the obturation means (7; E, D) by causing the pump (8) to deliver into the circuit obturated by the said obturation means (7; E, D).

10. Method as described in claim 9, in which isolation means (10; B) are arranged in the said off-take pipes (13) .

11. Method as described in claim 10, in which the said isolation means (10; B) are controlled by the pressure in the said rail (4).

12. Method as described in one of claims 10 or 11, in which the said obturation means include two two-way valves (E, D) in series, each isolation means including a piston (53) subjected on one side to the fuel pressure in the rail (4), and on the other to the pressure of the fuel supplied through a communication pipe connected to the circuit between the said two valves (E, D), in which method:
- on stopping of the engine: the pump (8) is stopped and the downstream valve (E) is closed,
- on starting of the engine: the upstream valve (D) is closed and the pump (8) is started,
- in operation: the two valves (E, D) are open.

## Patentansprüche

1. Vorrichtung zum Einspritzen in einen Verbrennungsmotor von einem Treibstoff in flüssiger Form der einen Siedepunkt unterhalb der Umgebungstemperatur hat, bei Umgebungsdruck, umfassend einen Kreislauf mit geschlossener Zirkulation, der umfasst: ein Treibstoffreservoir (1), verbunden mit einer Pumpe (8), die einen Zufuhrverteiler (4) speist, der mit Einspritzern (2) durch Abzweigungsleitungen (13; 57) verbunden ist und mit dem Reservoir (1) durch eine Rücklaufleitung (5) verbunden ist, **dadurch gekennzeichnet, dass** sie außerdem umfasst:
- Sperrmittel (7; E, D), die stromabwärts des Verteilers (4) derart angeordnet sind, dass der Kreislauf gesperrt wird,
- Fernsteuerungsmittel der Sperrmittel (7, E, D) und Isolationsmittel (10; B) zwischen den Einspritzern (2) und dem Verteiler (4), worin die Isolationsmittel Steuerungsmittel (9; 43) umfassen, die durch den im Inneren des Verteilers (4) herrschenden Druck des Treibstoffs betätigt werden, und in welcher die Pumpe (8) einen zulässigen Befüllungsdruck wenigstens gleich dem Verflüssigungsdruck des Treibstoffs unter den Temperaturbetriebsbedingungen des Motors hat, wobei der Verflüssigungsdruck beim Start des Motors erhalten wird, wenn die Pumpe (8) über den durch die Sperrmittel (7; E, D) gesperrten Kreislauf füllt.

2. Vorrichtung nach Anspruch 1, in der der Kreislauf stromaufwärts des Verteilers (4) ein zweites Sperrmittel (6; A) des Kreislaufs umfasst.

3. Vorrichtung nach Anspruch 2, in der das zweite Sperrmittel (6; A) vom Typ einer Anti-Rücklaufklappe ist.

4. Vorrichtung nach einem der vorhergehenden Ansprüche, bei der der Kreislauf Mittel zur Erzeugung (C) eines Druckverlusts stromabwärts des Verteilers (4) derart umfasst, dass ein Minimaldruck in dem Zufuhrverteiler (4) erhalten wird.

5. Vorrichtung nach Anspruch 1, in der die Isolationsmittel einen Schieber (11) mit zwei Positionen umfassen, wobei die gesperrte Position durch Betätigung eines Rückstellmittels (15) gehalten wird, wobei die offene Position durch die Wirkung des Treibstoffdrucks erhalten wird, der durch die Steuerungsleitung (9) zugeführt wird, die den Verteiler mit den Isolierungsmitteln verbindet.

6. Vorrichtung nach Anspruch 1, bei der die Sperrmittel stromabwärts zwei ferngesteuerte Zwei-Wege-Ventile (E, D) umfassen, wobei die Isolierungsmittel einen Kolben (53) umfassen, der von einer Seite (54) dem Treibstoffdruck in dem Verteiler unterzogen ist, von der anderen (58) dem durch die Kommunikationsleitung (43) zugeführten Treibstoffdruck, welche mit dem Kreislauf zwischen den beiden Ventilen (E, D) verbunden ist, wobei der Kolben fest verbunden ist mit einem Treibstoffzufuhrregelungsmittel (55) zwischen dem Verteiler und den Einspritzern.

7. Vorrichtung nach Anspruch 6, in der die Isolierungsmittel eine Rückstellfeder (59) umfassen, die den Kolben (53) bewegt, und das Zufuhrregelungsmittel (55), um jene zu sperren, wenn die Druckdifferenz zwischen den beiden Seiten des Kolbens kleiner als ein vorbestimmter Wert ist.

8. Vorrichtung nach einem der Ansprüche 6 oder 7, in der die Fernsteuerungsmittel Vorgaben auf zwei Ventile unter Berücksichtigung der Phasen: Betrieb, Stopp und Start abgeben.

9. Verfahren zum Einspritzen in flüssiger Form in einen Verbrennungsmotor von einem Treibstoff mit einem Siedepunkt unterhalb der Umgebungstemperatur bei Umgebungsdruck, in dem man die folgenden Stufen durchführt:
- man ordnet ein Treibstoffreservoir (1) an, das mit einer Pumpe (8) verbunden ist, welche einen Zufuhrverteiler (4) speist, der mit Einspritzern (2) durch Abzweigungsleitungen (13; 57) verbunden ist und mit dem Reservoir (1) durch eine Rücklaufleitung (5), Sperrmittel (7, E, D), die stromabwärts des Verteilers (4) angeordnet sind, derart, das man den Kreislauf sperren kann, Femsteuerungsmittel dieser Sperrmittel (7, E, D),
- man wählt die Pumpe (8), um einen zulässigen Befüllungsdruck wenigstens gleich dem Verflüssigungsdruck des Treibstoffs unter Temperaturbetriebsbedingungen des Motors zu haben,
- man verflüssigt beim Start des Motors den Treibstoff stromaufwärts der Sperrmittel (7; E, D), indem man die Pumpe (8) in dem durch die Sperrmittel (7; E, D) gesperrten Kreislauf durchsetzen lässt.

10. Verfahren nach Anspruch 9, bei dem man Isofierungsmittel (10; B) auf den Abzweigungsleitungen (13) anordnet.

11. Verfahren nach Anspruch 10, bei dem man die Isolationsmittel (10; B) durch den Druck steuert, der in dem Verteiler (4) herrscht.

12. Verfahren nach einem der Ansprüche 10 oder 11, bei dem die Sperrmittel zwei Ventile (E, D) von zwei Wegen in Reihe umfassen, wobei jedes Isolierungsmittel einen Kolben (53) umfasst, der an einer Seite dem Treibstoffdruck in dem Verteiler (4) unterzogen ist, an der anderen dem Treibstoffdruck, der durch die Kommunikationsleitung zugeführt wird, die mit dem Kreislauf zwischen den beiden Ventilen (E, D) verbunden ist, in welchem Verfahren:
- bei Stop des Motors: man die Pumpe (8) anhält und das Ventil stromabwärts (E) sperrt,
- beim Start des Motors: man das Ventil stromaufwärts (D) sperrt, man die Pumpe (8) startet,
- beim Betrieb: die beiden Ventile (E, D) offen sind.
